Europäisches Patentamt

European Patent Office

Office européen des brevets

(11) Numéro de publication: **0 112 783 B1**

(12) **FASCICULE DE BREVET EUROPEEN**

(45) Date de publication de fascicule du brevet:
**10.07.91**

(51) Int. Cl.⁵: **G01F 23/24**, G01K 7/00

(21) Numéro de dépôt: **83402537.1**

(22) Date de dépôt: **27.12.83**

(54) **Sonde thermique pour la détection de la présence ou de l'absence d'un liquide.**

(30) Priorité: **28.12.82 FR 8221914**

(43) Date de publication de la demande:
**04.07.84 Bulletin 84/27**

(45) Mention de la délivrance du brevet:
**10.07.91 Bulletin 91/28**

(84) Etats contractants désignés:
**BE DE GB IT NL SE**

(56) Documents cités:
EP-A- 0 009 252       EP-A- 0 016 263
DE-A- 3 111 948       FR-A- 2 315 086
GB-A- 2 006 521       US-A- 3 748 174

(73) Titulaire: **REGIE NATIONALE DES USINES RE-
NAULT**
**Boîte postale 103 8-10 avenue Emile Zola**
**F-92109 Boulogne-Billancourt(FR)**

(72) Inventeur: **Brisset, Pierre**
**68, rue J.P. Timbaud**
**F-750011 Paris(FR)**
Inventeur: **Warenghem, Michel**
**8, avenue de l'Abbé Saint Pierre**
**F-92450 Suresnes(FR)**

(74) Mandataire: **Srour, Elie et al**
**REGIE NATIONALE DES USINES RENAULT (S.
0804) 8 & 10 Avenue Emile Zola**
**F-92109 Boulogne Billancourt(FR)**

**Description**

La présente invention concerne une sonde thermique pour la détection de la présence ou de l'absence d'un liquide, du type comprenant un élément sensible conducteur de l'électricité en un matériau de résistivité électrique et à coefficient de température élevés immergeable dans un liquide.

Une telle sonde permet d'utiliser la différence de conduction thermique entre un environnement gazeux et un environnement liquide pour détecter la présence ou l'absence de ce dernier. En effet, lorsque l'élément conducteur d'une telle sonde est parcouru par un courant, il s'échauffe sensiblement en raison de sa résistivité élevée. Sa température sera peu affectée par un environnement liquide, mais beaucoup plus par un environnement gazeux, ce qui se traduira par des différences de résistance électrique aisément mesurables. Une telle sonde peut être utilisée pour la détection d'un niveau de liquide et elle est particulièrement intéressante pour la détection de faibles différences de niveau, par exemple pour la détection du niveau minimal d'huile de lubrification dans le carter d'un moteur à combustion interne.

On connait, notamment par le brevet FR 2.367.276, des sondes de ce type, montées en série sur véhicules automobiles, qui utilisent comme élément conducteur sensible un fil électriquement résistant d'un diamètre de 80 microns environ et de plusieurs centimètres de longueur.

Cependant, un tel fil est très coûteux et, en raison de sa fragilité, son maniement comme son montage s'avèrent délicats. De plus, le bobinage de ce fil pour en réduire les dimensions et permettre une mesure ponctuelle se heurte au problème de rétention des liquides du fait de leur viscosité.

On connait par ailleurs par les demandes de brevet EP-A-0009252,US-3748174,EP0016263 des sondes thermiques de niveau du type "couche mince" dont l'élément sensible est constitué par une couche mince métallique disposée sur un substrat isolant.

Toutefois, comme la sonde du brevet français précité, avec ce deuxième type de sonde, les indications sont proportionnelles au niveau de liquide qui mouille plus ou moins la résistance ou l'élément sensible de mesure.

Or, l'expérience montre que pour la mesure du niveau de liquides susceptibles de comporter des impuretés, par exemple les huiles des moteurs à combustion interne, il est nécessaire d'obtenir de grands écarts de température, et donc de résistance, sur des sondes thermiques. De plus, dans le cas de la mesure du niveau d'huile moteur, il est absolument nécessaire que la sonde ne risque en aucun cas de faire croire à la présence d'huile alors qu'il n'y en a pas, simplement parce que des dépôts de matières diverse se sont faits à la surface de la sonde au cours du fonctionnement.

L'invention permet de résoudre ce problème rencontré avec les sondes de la technique antérieure grâce au fait que la sonde présente des zones ou surfaces définissant des niveaux discrets tout ou rien conduisant à un échauffement localisé très important.

De plus, les diverses conditions précitées imposent des courants importants et brefs qui introduisent des contraintes technologiques dans le dessin de la sonde, et notamment dans les connexions entre l'élément sensible géométriquement localisé et les conducteurs d'arrivée du courant. Ce sont ces contraintes technologiques que l'invention, telle est définie dans les sous-revendications, permet de satisfaire. On notera enfin que ces contraintes sont très différentes de celles rencontrées avec les thermomètres de température dans lesquels il importe que l'ensemble du support soit à la température ambiante et qu'au contraire l'échauffement de l'élément sensible sous l'action du courant de mesure soit aussi faible que possible.

La soude de l'invention est définie dans la revendication 1.
D'autres caractéristiques et avantages de l'invention ressortiront de la description qui va suivre d'exemples de sa réalisation illustrés par les dessins annexés sur lesquels :
- la figure 1 est une vue de dessus d'une sonde suivant l'invention,
- la figure 2 est une vue en coupe suivant la ligne 2-2 de la figure 1,
- la figure 3 est une vue de dessus d'une sonde suivant une variante de réalisation, et
- la figure 4 est une vue schématique en coupe d'un carter d'huile équipé d'une sonde suivant l'invention.

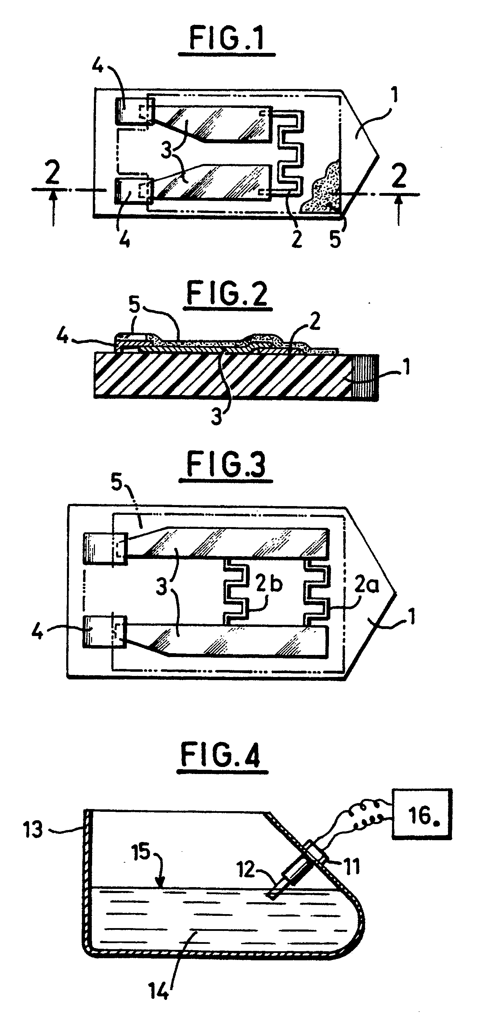

En se reportant à la figure 1, la sonde représentée comprend un support 1 en un matériau électriquement isolant et très mauvais conducteur de la chaleur. Ainsi, des impulsions de chaleur provoquées à sa surface sont plus facilement échangées vers l'extérieur qu'absorbées par le support lui-même. Différents essais montrent que des matériaux tels que les silices, les stéatites, les céramiques à base d'oxyde de zirconium et les matières plastiques polyimides conviennent très bien. La forme parallélèpipèdique du support, prolongé à l'une de ses extrémités par une partie triangulaire, confère une bonne résistance mécanique aux chocs et aux vibrations, favorise l'écoulement des liquides et s'oppose à leur rétention, et facilite son utilisation comme substrat pour la réalisation de la sonde suivant diverses technologies.

Sur le substrat 1 est déposé un élément conducteur sensible 2 du type pelliculaire ou en ruban qui possède une résistivité élevée par unité de surface, ainsi qu'un coefficient de température élevé. L'élément sensible 2 peut être réalisé en matériaux à base de nickel, d'oxyde de nickel, de platine, qui possèdent une bonne stabilité dans le temps. Sa forte résistivité et son dessin sinueux permettent de loger une résistance importante sur une petite surface et de faire une mesure pratiquement ponctuelle.

Chaque extrémité de l'élément sensible 2 est connectée à un plot ou borne de connexion 4, supportant des systèmes de fixation, par un conducteur de liaison 3 qui doit être le moins sensible possible au niveau du liquide à contrôler. A cet effet, chaque conducteur de liaison 3, du type pelliculaire ou en ruban, présente une faible résistivité et une surface la plus grande possible. Pour des raisons de conductivité électrique entre l'élément sensible 2 et les conducteurs de liaison 3, ces derniers sont de préférence réalisés dans un matériau de même nature chimique de base que l'élément sensible 2. Ainsi, les connexions peuvent être rejetées loin de l'élément sensible 2 avec la certitude qu'elles ne perturbent pas les échanges thermiques autour de ce dernier et n'affectent pas la précision de la mesure fournie par la sonde. Les plots ou bornes de sortie 4 sont réalisés suivant la composition des conducteurs de liaison et la technologie de fabrication utilisée, soit par un dépôt d'argent ou de palladium-argent, soit par un dépôt électrolytique d'or ou de nickel en vue d'une éventuelle soudure à l'étain plomb-argent, par ultrasons, ou par "bonding".

L'élément sensible 2 pouvant être immergé complètement dans un liquide électriquement conducteur, il est de préférence protégé par un dépôt d'une ou plusieurs couches 5 d'un matériau électriquement isolant et imperméable au liquide à contrôler, du genre verre minéral ou matière plastique hydrofuge, suffisamment minces pour ne pas affecter les échanges thermiques entre l'élément sensible et le milieu environnant.

Les dépôts effectués sur le support 1 peuvent être réalisés suivant l'une ou la combinaison de trois technologie : évaporation sous vide, pulvérisation cathodique et couches épaisses hautes et basses températures.

Cette dernière technique est préférée car elle ne nécessite que quatre dépôts par sérigraphie et deux cuissons pour la réalisation de la sonde. De plus, la fiabilité de la technologie des couches épaisses dans le domaine électronique et l'environnement rencontré dans les véhicules automobiles n'est plus à démontrer.

La figure 3 représente une sonde en tous points identique à celle des figures 1 et 2 à ceci près que l'élément sensible 2 est constitué de deux pellicules ou rubans conducteurs 2a et 2b disposés électriquement en parallèle. Cette configuration permet de détecter la présence d'un liquide à deux niveaux différents, suivant qu'un seul ou les deux conducteurs 2a et 2b se trouvent immergés dans le liquide. Bien entendu, on peut prévoir un plus grand nombre de conducteurs résistifs en parallèle pour constituer l'élément sensible 2, la principale limitation étant l'importance du courant électrique qu'il convient alors de fournir à la sonde.

La figure 4 montre l'application de la sonde des figures 1 et 3 à la détection d'un niveau de liquide. Une embase 11, portant la sonde proprement dite 12, est fixée à travers une paroi d'un récipient 13 (par exemple un carter d'huile de lubrification de moteur) contenant un liquide 14, dans une position telle que l'élément sensible 2 est amené près du niveau à mesurer 15. La sonde 12 est connectée électriquement à un circuit 16 permettant de détecter les variations de résistance de l'élément sensible 2 lorsque celui-ci passe de l'environnement gazeux qui règne au-dessus du liquide 14 au liquide 14 lui-même, et inversement. Le circuit 12 peut être similaire à celui, classique, des sondes connues à fil mince et ne sera donc pas décrit.

Comme indiqué précédemment, la sonde décrite peut également servir à mesurer la température du liquide dans lequel l'élément sensible 2 est immergé puisque, en effet, la résistance de ce dernier dépendra de la température du liquide. En mesurant cette résistance, ou une image de celle-ci, on pourra, à l'aide d'un circuit approprié et d'un étalonnage convenable, fournir une indication de température continue ou par rapport à un ou plusieurs seuils. Cette fonction de mesure de la température peut naturellement être assurée conjointement avec la détection de niveau. On notera que l'utilisation de la sonde décrite pour la mesure des températures est grandement facilitée par le fait que la résistance nominale de l'élément sensible 2 peut être aisément ajustée, même dans le cadre d'une production en grande série, par attaque au laser ou par sablage.

**Revendications**

1.  Sonde thermique pour la détection de l'absence ou de la présence d'un liquide, du type comprenant un élément sensible (2,2a,2b) plat conducteur de l'électricité, d'une épaisseur de l'ordre de quelques micromètres, en un matériau de résistivité et de coefficient de température élevés, placé à la surface d'un support isolant (1) électrique et thermique et immergeable dans un liquid, l'élément sensible et les conducteurs de liaison (3) sont recouverts d'au moins une fine couche (15) d'un matériau électriquement isolant et imperméable au liquide à contrôler, ledit élément sensible présentant un échauffement différent suivant qu'il est immergé dans le liquide ou dans l'atmosphère environnante alors qu'il est parcouru par un courant de mesure important caractérisé en ce que l'élément sensible (2,2a,2b) est disposé à la surface du support isolant (1) de façon à définir des niveaux de référence discrets tout ou rien et de manière à être totalement immergé ou émergé du liquide à mesurer suivant que le niveau de ce dernier est supérieur ou inférieur au niveau de référence constitué par la surface utile de l'élément sensible.

2. Sonde thermique selon la revendication 1, caractérisée en ce que le dessin de l'élément sensible (2, 2a, 2b) a une forme sinueuse de faible hauteur compatible avec la précision de la mesure du niveau (15) du liquide.

3. Sonde thermique selon l'une quelconque des revendications 1 et 2, caractérisée en ce que l'élément sensible (2, 2a, 2b) est constitué d'un matériau à base de nickel et d'oxydes de nickel avec une forte proportion de ces derniers.

4. Sonde thermique selon l'une quelconque des revendications 1 et 2, caractérisée en ce que l'élément sensible (2, 2a, 2b) est constitué d'un matériau à base de platine.

5. Sonde thermique selon l'une quelconque des revendications 1 à 4, caractérisée en ce que l'élément sensible (2, 2a, 2b) est connecté à des bornes de sortie (4) par des conducteurs de liaison pelliculaire (3) à basse résistivité par unité de surface.

6. Sonde thermique selon la revendication 5, caractérisée en ce que les conducteurs de liaison (3) sont en un matériau de même nature chimique de base que l'élément sensible (2, 2a, 2b).

7. Sonde thermique selon l'une quelconque des revendications 1 à 6, caractérisée en ce que l'élément sensible (2, 2a, 2b) et les conducteurs de liaison (3) sont de type "couches épaisses" et sont obtenus par sérigraphie.

8. Sonde thermique selon l'une quelconque des revendications 1 à 7, caractérisée en ce que le support (1) est l'un des matériaux ayant pour base le stéatite, le silice et l'oxyde de zirconium.

9. Sonde thermique selon l'une quelconque des revendications 1 à 7, caractérisée en ce que le support (1) est en matière plastique polyimide.

10. Sonde thermique selon l'une quelconque des revendications 1 à 9, caractérisée en ce que le support (1) présente la forme d'un parallélèpipède prolongé à l'une de ses extrémités par une partie triangulaire.

11. Sonde thermique selon l'une quelconque des revendications 1 à 10, caractérisée en ce que l'élément sensible est constitué de plusieurs rubans conducteurs (2a, 2b) disposés électriquement en parallèle et définissant un nombre correspondant de niveaux de référence.

## Claims

1. A thermal sensor for detecting the absence or the presence of a liquid of the type comprising a flat electrically conductive sensitive element (2, 2a, 2b) of a thickness of the order of a few micrometers, of a material of high resistivity and with a high temperature coefficient, which is disposed at the surface of an electrical and thermal insulating support (1) which can be immersed in a liquid, the sensitive element and the connecting conductors (3) are covered by at least one thin film (15) of an electrically insulating material which is impermeable to the liquid to be checked, said sensitive element exhibiting a different heating effect depending on whether it is immersed in the liquid or in the surrounding atmosphere when a substantial measuring current passes through the sensitive element, characterised in that the sensitive element (2, 2a, 2b) is disposed at the surface of the insulating support (1) in such a way as to define all-or-nothing discrete reference levels and so as to be totally immersed or emerged from the liquid to be measured depending on whether the level of the latter is higher or lower than the reference level formed by the useful surface of the sensitive element.

2. A thermal sensor according to claim 1 characterised in that the configuration of the sensitive element (2, 2a, 2b) is of a sinuous shape of small height compatible with the accuracy of measurement of the level (15) of the liquid.

3. A thermal sensor according to either one of claims 1 and 2 characterised in that the sensitive element (2, 2a, 2b) is formed from a material based on nickel and nickel oxides with a high proportion of the latter.

4. A thermal sensor according to either one of claims 1 and 2 characterised in that the sensitive element (2, 2a, 2b) is formed from a platinum-based material.

5. A thermal sensor according to any one of claims 1 to 4 characterised in that the sensitive element (2, 2a, 2b) is connected to output terminals (4) by film connecting conductors (3) with a low level of resistivity per unit of surface area.

6. A thermal sensor according to claim 5 characterised in that the connecting conductors (3) are of a material of the same basic chemical nature as the sensitive element (2, 2a, 2b).

7. A thermal sensor according to any one of claims 1 to 6 characterised in that the sensitive element (2, 2a, 2b) and the connecting conductors (3) are of 'thick film' type and are produced by screen printing.

8. A thermal sensor according to any one of claims 1 to 7 characterised in that the support (1) is one of the materials based on steatite , silica and zirconium oxide.

9. A thermal sensor according to any one of claims 1 to 7 characterised in that the support (1) is of polyimide plastics material.

10. A thermal sensor according to any one of claims 1 to 9 characterised in that the support (1) is in the shape of a parallelepiped which is prolonged at one of its ends by a triangular portion.

11. A thermal sensor according to any one of claims 1 to 10 characterised in that the sensitive element is formed by a plurality of conductor strips (2a, 2b) which are disposed electrically in parallel and which define a corresponding number of reference levels.

## Ansprüche

1. Thermische Sonde zur Ermittlung des Vorhandenseins oder Nichtvorhandenseins einer Flüssigkeit, mit einem flachen, elektrisch leitenden Fühler (2, 2a, 2b), dessen Dicke in der Größenordnung einiger Mikrometer liegt und der aus einem Material erhöhten spezifischen Leitungswiderstandes und erhöhten Temperaturkoeffizienten besteht und der auf der Oberfläche einer elektrisch und thermisch isolierenden Halterung (1) angeordnet ist, welche in eine Flüssigkeit eintauchbar ist, wobei der empfindliche Fühler und die Verbindungsleitungen (3) mit wenigstens einer dünnen Schicht (15) aus einem elektrisch isolierenden Material bedeckt sind, die für die zu messende Flüssigkeit undurchdringbar ist und wobei der empfindliche Fühler unterschiedliches Erwärmungsverhalten aufweist, je nachdem ob er in die Flüssigkeit eingetaucht ist oder sich in der Umgebungsatmosphäre befindet, während er von einem erheblichen Meßstrom durchflossen wird, dadurch gekennzeichnet, daß der empfindliche Fühler (2, 2a, 2b) dergestalt auf der Oberfläche der isolierenden Halterung (1) angeordnet ist, daß er zwei unterschiedliche Ja- oder Nein-Meßstufen bildet und zwar so, daß er in die zu messende Flüssigkeit vollständig eintaucht oder aus dieser herausragt, je nachdem ob die Flüssigkeitshöhe oberhalb oder unterhalb der durch die Nutzfläche des empfindlichen Fühlers gebildeten Meßstufen liegt.

2. Thermische Sonde nach Anspruch 1, dadurch gekennzeichnet, daß die Ausgestaltung des empfindlichen Fühlers (2, 2a, 2b) eine sinusähnliche Form geringer Höhe aufweist, entsprechend der Meßpräzision der Höhe (15) der Flüssigkeit.

3. Thermische Sonde nach einem der Ansprüche 1 und 2, dadurch gekennzeichnet, daß der empfindliche Fühler (2, 2a, 2b) aus einem Material auf Basis von Nickel und Nickeloxiden mit starkem Anteil der letzteren besteht.

4. Thermische Sonde nach einem der Ansprüche 1 und 2, dadurch gekennzeichnet, daß der sensible Fühler (2, 2a, 2b) aus einem Material auf Platinbasis besteht.

5. Thermische Sonde nach einem der Ansprüche 1 bis 4, dadurch gekennzeichnet, daß die Anschlußenden (49) des empfindlichen Fühlers (2, 2a, 2b) mit filmartigen Verbindungsleitern (3) geringen spezifischen Leitungswiderstandes pro Oberflächeneinheit verbunden sind.

6. Thermische Sonde nach Anspruch 5, dadurch gekennzeichnet, daß die Verbindungsleiter (3) aus einem Material bestehen der gleichen chemischen Grundlage wie der empfindliche Fühler (2, 2a, 2b).

7. Thermische Sonde nach einem der Ansprüche 1 bis 6, dadurch gekennzeichnet, daß der empfindliche Fühler (2, 2a, 2b) und die Verbindungsleiter (3) vom Dickschichttyp sind und durch Siebdruck erhalten wurden.

8. Thermische Sonde nach einem der Ansprüche 1 bis 7, dadurch gekennzeichnet, daß die Halterung (1) aus einem Material auf Basis Speckstein, Siliziumoxid und Zirkoniumoxid besteht.

9. Thermische Sonde nach einem der Ansprüche 1 bis 7, dadurch gekennzeichnet, daß die Halterung (1) aus einem Polyimid-Kunststoff besteht.

10. Thermische Sonde nach einem der Ansprüche 1 bis 9, dadurch gekennzeichnet, daß die Halterung (1) die Form eines Parallelepipeds aufweist, das an einem Ende durch einen dreieckigen Abschnitt verlängert ist.

11. Thermische Sonde nach einem der Ansprüche 1 bis 10, dadurch gekennzeichnet, daß der empfindliche Fühler aus mehreren leitenden Bahnen (2a, 2b) besteht, welche elektrisch parallelgeschaltet sind und eine entsprechende Anzahl von Meßstufen bilden.

## FIG.1

## FIG.2

## FIG.3

## FIG.4